# EUROPEAN PATENT SPECIFICATION

(11) **EP 4 322 787 B1**
(45) Date of publication and mention of the grant of the patent: **29.01.2025**
(21) Application number: 22719612.8
(22) Date of filing: 13.04.2022
(51) Int. Cl.: A41D 19/00, F03G 7/06, G06F 3/01

(54) **HAPTIC GLOVE**
HAPTISCHER HANDSCHUH
GANT HAPTIQUE

(30) Priority: 13.04.2021 GB 202105221; 29.09.2021 GB 202113969; 04.11.2021 GB 202115907
(43) Date of publication of application: 21.02.2024
(73) Proprietor: Cambridge Mechatronics Limited, Cambridge CB4 0WG (GB)
(72) Inventor: BROWN, Andrew Benjamin Simpson, Cambridge Cambridgeshire CB4 1YG (GB); HOWARTH, James, Cambridge Cambridgeshire CB4 1YG (GB); BUNTING, Stephen Matthew, Cambridge Cambridgeshire CB4 1YG (GB); OOI, David, Cambridge Cambridgeshire CB4 1YG (GB)
(74) Representative: Cambridge Mechatronics Limited
(86) International application number: PCT/GB2022/050944
(87) International publication number: WO 2022/219347

(56) References cited:
- EP-A1- 3 506 059
- WO-A2-2005/117766
- WO-A2-2015/134336
- CN-U- 209 933 404
- JP-A- 2016 145 582
- US-A1- 2011 282 253
- US-A1- 2018 077 976
- US-A1- 2019 204 921

## Description

### Field

The present invention relates to a wearable article that provides haptic feedback to a user, in particular to a haptic glove. The present invention in particular relates to such haptic gloves using shape memory alloy (SMA) wires for providing haptic feedback. The present invention also relates to a latch, for example for use in the haptic glove.

### Background

Haptic gloves may be used to provide haptic or tactile feedback to a user's hand, for example when used in combination with virtual reality (VR) or augmented reality (AR) technology. Haptic gloves may provide a variety of sensations to a user's hand, ranging from giving the impression of gripping a virtual object (e.g. in a video game) to imitating texture and other surface structure on such a virtual object. Existing haptic gloves, however, are still limited in their capability of providing accurate haptic feedback and tracking a user's hand movement. Additionally, the mechanisms driving existing haptic gloves are large and heavy, limiting the adoption of haptic gloves in VR applications.

US 2018077976 A1 discloses a haptic glove including a glove body including a glove digit corresponding to a phalange of a user hand. The glove digit has a pair of flexible tendons, including a first and a second tendon, which are parallel to a bend centerline that bisects a surface of the glove digit. The first and second tendons are positioned respectively on opposite sides of the bend centerline. The haptic glove further comprises an actuator coupled to the glove body and the first and second tendons, the actuator configured to actuate the tendons to control movement of the glove digit.

### Summary

According to the present invention, there is provided a haptic glove for providing haptic feedback to a user's hand, the haptic glove comprising: a base portion and one or more finger portions extending from the base portion, wherein each finger portion is pivotally movable relative to the base portion, and one or more cables, each comprising a distal end connected to a respective finger portion and a proximal end extending towards the base portion; and one or more cable control assemblies, at least one (optionally each) cable control assembly comprising: a constrain mechanism configured, when engaged, to constrain movement of the proximal end of a respective cable relative to the base portion, thereby constraining movement of a respective finger portion relative to the base portion, and an SMA wire arranged, on contraction, to engage or disengage the constrain mechanism.

Due to its high energy density, SMA wire may be used as an actuator in particularly compact applications, reducing the size of the cable control assembly. The SMA wire, on contraction, selectively engages or disengages the constrain mechanism to or from the cable. The SMA wire may be powered or energized to contract, for example by passing an electrical power through the SMA wire. On elongation, e.g. due to an opposing biasing force of a biasing element (such as a resilient element, e.g. a spring or a magnet) or of an opposing SMA wire, the SMA wire respectively disengages or engages the constrain mechanism from or to the cable. This selectively constrains movement of the cable and thus the finger portion, providing haptic feedback to a user.

The constrain mechanism be coupled or connected (e.g. via one or more movable and/or intermediary parts) to the cable on contraction of the SMA wire, such that the constrain mechanism affects (i.e. constrains) movement of the cable. The constrain mechanism may be decoupled or disconnected from the cable when the SMA wire is not contracted, such that the constrain mechanism does not affect (i.e. does not constrain) movement of the cable. Alternatively, constrain mechanism be decoupled or disconnected from the cable on contraction of the SMA wire, such that the constrain mechanism does not affect (i.e. does not constrain) movement of the cable. The constrain mechanism may be coupled or connected to the cable (e.g. via one or more movable and/or intermediary parts) when the SMA wire is not contracted, such that the constrain mechanism affects (i.e. constrains) movement of the cable.

In some embodiments, the at least one (optionally each) cable control assembly comprises a constrain mechanism in the form of a locking mechanism configured, when engaged, to prevent movement of the proximal end of the respective cable relative to the base portion. The cable may thus be prevented from moving on curling of a user's finger, e.g. due to a locking part locking the cable in place (e.g. via any movable parts connected to the cable).

In some embodiments, the at least one (optionally each) cable control assembly comprises a constrain mechanism in the form of a braking mechanism configured, when engaged, to apply a frictional force to the proximal end of the respective cable. The frictional force may be so as to prevent the cable from moving. Alternatively, the frictional force may be lower so as to allow some movement of the cable when a large external force is applied to the cable, e.g. by a user. In any case, the frictional force resists movement of the cable and so may provide haptic feedback. Optionally, the cable control assembly may vary the amount of engagement with the braking mechanism so as to vary the frictional force, for example within a continuous range or between multiple discrete levels. For example, the SMA wire may, on initial contraction, engage the brake mechanism such that a first frictional force resists movement of the cable, and on further contraction, engage the brake mechanism such that a second frictional force resists movement of the cable, where the second frictional force is different to (e.g. larger than) the first frictional force.

In some embodiments, the at least one (optionally each) cable control assembly comprises a constrain mechanism in the form of a spring mechanism configured, when engaged, to apply a bias force along the respective cable. The spring mechanism, when engaged, may apply tension to the respective cable. This may give the impression to a user of the haptic glove of pulling a trigger or squeezing an elastic ball, for example. The spring mechanism may thus provide a further, different haptic sensation to the locking or brake mechanisms, thus further improving haptic feedback achievable by the haptic glove.

In some embodiments, the at least one (optionally each) cable control assembly comprises constrain mechanisms in the form of i) the spring mechanism and ii) at least one of the locking and braking mechanism. This enables improved haptic feedback compared to situations in which just one of these constrain mechanisms is provided. In some further embodiments, the at least one (optionally each) cable control assembly comprises constrain mechanisms in the form of i) the spring mechanism and ii) the locking mechanism and iii) the braking mechanism.

In some embodiments, the at least one cable control assembly (optionally each) comprises at least two SMA wires, wherein one SMA wire is arranged selectively to engage or disengage the locking or braking mechanism and another SMA wire is arranged selectively to engage or disengage the spring mechanism. So, the spring mechanism and the locking or braking mechanisms are independently controllable. In some alternative embodiments, the at least one cable control assembly comprises an SMA wire arranged, on initial contraction, to i) engage the spring mechanism or ii) disengage the locking or braking mechanism and, on further contraction, to respectively i) engage the locking or braking mechanism or ii) disengage the spring mechanism.

This SMA wire may form part of a multi-stage latch, for example, such that
In an unlatched position of the multi-stage latch i) neither of the spring mechanism and the locking or braking mechanism is engaged or ii) both of the spring mechanism and the locking or braking mechanism is engaged, and
In a first latched position of the multi-stage latch i) the spring mechanism is engaged (and the locking or braking mechanism remains disengaged).
or ii) the locking or braking mechanism is disengaged (and spring mechanism remains engaged) and,
In a second latched position of the multi-stage latch, the locking or braking mechanism is engaged (and spring mechanism remains engaged) or ii) the spring mechanism is disengaged (and the locking or braking mechanism remains disengaged).

This allows a single SMA wire to selectively engage or disengage at least two constrain mechanisms. In embodiments in which three or more separate constrain mechanisms are provided, a single SMA wire (optionally in a multi-stage latch) may be used to selectively engage or disengage the three or more separate constrain mechanisms in equivalent manner.

In some embodiments, the at least one cable control assembly comprises a retraction mechanism configured to permanently apply a retracting bias force along the cable. The retraction mechanism may be embodied by a resilient element, such as a spring (e.g. torsion spring), for example. The retraction mechanism may remain connected to the cable at all times, so as to put tension on the cable at all times. The spring mechanism, when engaged, provides additional tension to the cable and so provides haptic feedback even when the retraction mechanism is engaged. Preferably, the spring mechanism provides a bias force that is at least equal to the bias force of the retraction mechanism.

In some embodiments, the at least one cable control assembly comprises a movable part that is coupled to the proximal portion of the cable. The movable part may be connected or coupled to the cable at all times. The movable part may be rotatably movable, e.g. about an axis or pivot, or may be translationally movable. The movable part may move with the cable.

In some embodiments, the movable part comprises a reel and the cable is wound on the reel. A reel provides a particularly compact arrangement for large movement of the proximal portion of the cable.

In some embodiments, the reel is a multi-diameter reel comprising portions with different diameters, and different cables are wound on the portions of the reel with different diameters.

In some embodiments, each finger portion comprises a plurality of finger segments, and different cables are connected at their distal ends to different finger segments of a respective finger portion, wherein the different cables are wound on parts of the reel with different diameters. Movement of the cables connected to the finger segments of a single finger portion may thus be geared. This allows the multiple cables to be controlled using a single cable control mechanism, simplifying control.

In some embodiments, the at least one cable control assembly comprises an intermediary part, and wherein the SMA wire is arranged to move the intermediary part so as to engage or disengage the constrain mechanism. Movement of the intermediary part may selectively connect or couple, or disconnect or decouple, the cable (e.g. via the movable part) from the constrain mechanism.

In some embodiments, the intermediary part is arranged to pivot so as to engage or disengage the constrain mechanism. This makes control of the position of the intermediary part particularly reliable, providing improved engagement and disengagement of the constrain mechanism.

In some embodiments, the SMA wire is coupled to the intermediary part via a resilient element. This may reduce the risk of damage to the SMA wire due to large external loads on the cable, which may be absorbed by the resilient element instead of the SMA wire. Furthermore, it may improve engagement or disengagement of the constrain mechanism, for example when the intermediary part comprises teeth for engaging complimentary teeth on the movable part or other part for connecting or coupling the cable to the constrain mechanism.

In some embodiments, the SMA wire is arranged to move the intermediary part into or out of engagement with the movable part so as to engage or disengage the constrain mechanism. Alternatively, the intermediary part may be in constant connection with the movable part, and the SMA wire may move the intermediary part into or out of engagement with a portion of the constrain mechanism (e.g. with the base portion or a part connected to a spring).

In some embodiments, the intermediary part and the movable part comprise engagement surfaces for engaging each other, wherein the engagement surfaces are configured, on engagement, to constrain sliding between the intermediary part and the movable part. Each engagement surface may comprise a plurality of complementary teeth, thus improving reliable coupling and suppressing sliding.

In some embodiments, the cable control assembly comprises a latch, the latch comprising a latching part movable between a latched position and an unlatched position, and wherein the SMA wire is arranged, on contraction, to move the latching part into the latched position, thereby engaging or disengaging the constrain mechanism. In some embodiments, a release SMA wire is arranged, on contraction, to move the latching part into the unlatched position, thereby respectively disengaging or engaging the constrain mechanism. The release SMA wire may move a release part so as to move the latching part into the unlatched position, for example. The latch is configured to remain in the latched or unlatched position when the SMA wire ceases to be energized. As such, energy consumption of the cable control assembly is reduced compared to a situation in which the SMA wire needs to be continuously powered to keep the constrain mechanism engaged or disengaged.

In some embodiments, the latch comprises a support structure comprising first and a second surface separated by a step, a latching part slidable along the first and/or second surfaces between the unlatched position engaging the first surface and the latched position engaging the step and second surface, and a biasing element arranged to bias the latching part against the step and the first and/or second surfaces, wherein the SMA wire is arranged, on contraction, to move the latching part along the first surface into the latched position under bias of the biasing element so as to engage or disengage the constrain mechanism. A release SMA wire may be arranged, on contraction, to move the latching part over the step into the unlatched position under bias of the biasing element. The release SMA wire may move a release part so as to move the latching part into the unlatched position, for example.

In some embodiments, the support structure comprises a second set of first and second surfaces separated by a second step, and wherein the latch further comprises: a second latching part slidably arranged along the second set of first and/or second surfaces between an unlatched position engaging the respective first surface and a latched position engaging the respective step and second surface, and a second SMA wire arranged, on contraction, to move the second latching part along the respective first surface into the latched position under bias of the second biasing element; wherein the latching part in its latched position is arranged to engage or disengage a first constrain mechanism, and the second latching part in its latched position is arranged to engage or disengage a second constrain mechanism, and wherein the release SMA wire is arranged, on contraction, to move both the latching part and the second latching part over the respective step into the respective unlatched position under bias of the respective biasing element.

As such, the latch is capable or selectively engaging or disengaging different constrain mechanism, for example the spring mechanism and one or the locking or braking mechanisms. A single SMA wire may be used to selectively disengage both constrain mechanisms.

In some embodiments, the support structure comprises a third surface separated from the second surface by a second step, wherein the latching part is slidably arranged along the first, second and/or third surfaces between the unlatched position engaging the first surface, a first latched position engaging the step and second surface and a second latched position engaging the second step and the third surface. As such, the latch may be a multi-stage latch. The multi-stage latch may adjust the frictional force of the braking mechanism, for example. The multi-stage latch may alternatively allow engaging of different constrain mechanism, for example.

In some embodiments, the release SMA wire is arranged to move the latching part from either of the first or second latched positions into the unlatched position under bias of the biasing element. As such, only a single SMA wire is required to release the latch.

In some embodiments, the release SMA wire is arranged, on initial contraction, to move the latching part from the second latched position over the second step into the first latched position under bias of the biasing element, and, on further contraction, to move the latching part from the first latched position over the first step into the unlatched position under bias of the biasing element.

According to the present invention, there is also provided a latch comprising a support structure comprising first and a second surface separated by a step, a latching part slidable along the first and/or second surfaces between an unlatched position engaging the first surface and a latched position engaging the step and second surface, and a biasing element arranged to bias the latching part against the step and the first and/or second surfaces, and an SMA wire arranged, on contraction, to move the latching part along the first surface into the latched position under bias of the biasing element. So, the latch described herein may form part of the present invention in isolation of the features of the haptic glove.

In some embodiments, the latch comprises a release SMA wire arranged, on contraction, to move the latching part over the step into the unlatched position under bias of the biasing element

In some embodiments, the support structure comprises a second set of first and second surfaces separated by a second step, and wherein the latch further comprises: a second latching part slidably arranged along the second set of first and/or second surfaces between an unlatched position engaging the respective first surface and a latched position engaging the respective step and second surface, and a second SMA wire arranged, on contraction, to move the second latching part along the respective first surface into the latched position under bias of the second biasing element.

In some embodiments, the release SMA wire is arranged, on contraction, to move both the latching part and the second latching part over the respective step into the respective unlatched position under bias of the respective biasing element.

In some embodiments, the support structure comprises a third surface separated from the second surface by a further step, wherein the latching part is slidable along the first, second and/or third surfaces between the unlatched position engaging the first surface, a first latched position engaging the step and second surface and a second latched position engaging the further step and the third surface.

In some embodiments, the release SMA wire is arranged to move the latching part from either of the first or second latched positions into the unlatched position under bias of the biasing element.

In some embodiments, the release SMA wire is arranged, on initial contraction, to move the latching part from the second latched position over the second step into the first latched position under bias of the biasing element, and, on further contraction, to move the latching part from the first latched position over the first step into the unlatched position under bias of the biasing element.

### Brief description of the drawings

Certain embodiments of the present invention will now be described, by way of example only, with reference to the accompanying drawings in which:
Fig. 1 is a schematic overview of a haptic glove;
Figs. 2A and 2B are schematic views of examples of the structure of the haptic glove;
Fig. 3 is a schematic view of a cable control assembly in accordance with embodiments of the present invention;
Fig. 4 is a schematic view of another cable control assembly in accordance with embodiments of the present invention;

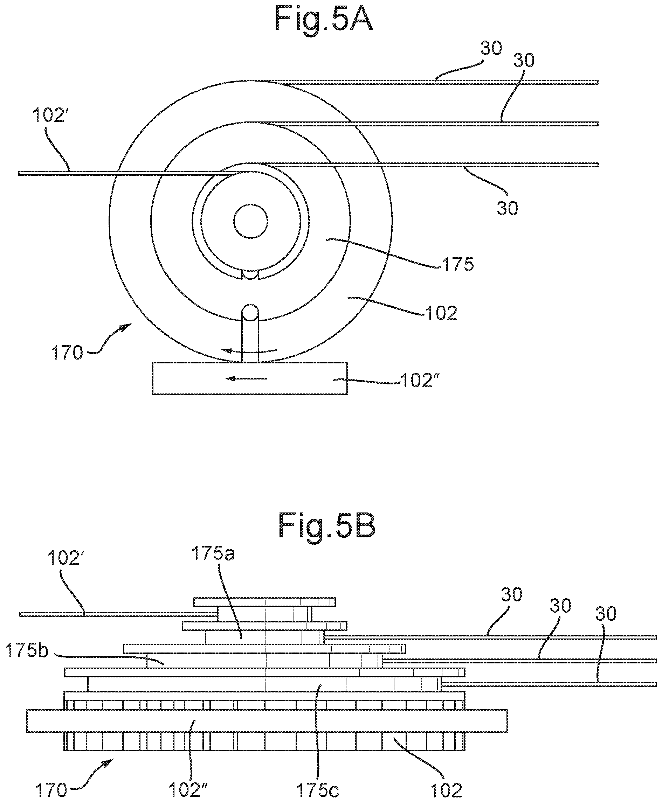

Figs. 5A and 5B show a multi-diameter reel implementing multi-cable control in the haptic glove;
Figs. 6A to 6E show schematic view of latches in accordance with embodiments of the present invention; and
Figs. 7A to 7D are schematic views of further cable control assemblies in accordance with embodiments of the present invention.

### Detailed description

### Overview of the haptic glove

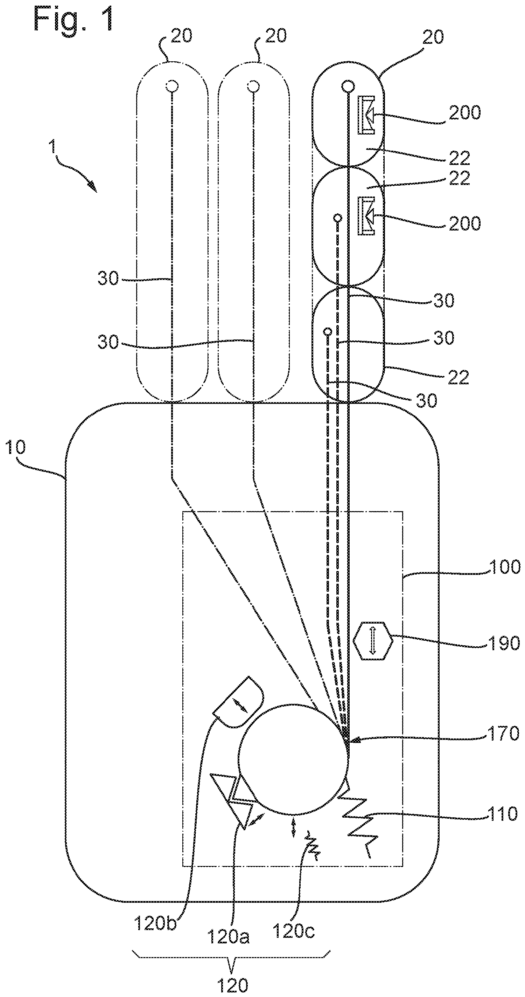

Fig. 1 schematically depicts a haptic glove 1 in accordance with the present invention. The haptic glove 1 is configured to be worn on a user's hand. The haptic glove 1 comprises a base portion 10 and one or more finger portions 20. The finger portions 20 are pivotally movable relative to the base portion 10. Each finger portion 20 may comprise a plurality of finger segments 22 that are pivotally movable relative to each other and relative to the base portion 10. The base portion 10 and the one or more finger portions 20 make up the structure or exoskeleton of the haptic glove 1. The base portion 10 is herein used as a reference frame relative to which movement of other components of the haptic glove 1 is described (unless otherwise indicated), but it will be appreciated that the base portion 10 in general may be movable itself and may comprise or be made up of parts that are movable relative to each other. Details and embodiments of the base portion 10 and the one or more finger portions 20 are described below.

The haptic glove 1 further comprises one or more cables 30 that is or are coupled at one end (herein referred to as the "distal end") to a respective finger portion 20. Multiple cables 30 may be provided per finger portion 20, as described in more detail below. The cable 30 may be any elongate element capable of carrying a tensile force. The cable 30 may be deformed by forces acting laterally to the tensile force carried by the cable 30.

The cable 30, in particular movement of the cable 30, is controlled by a cable control assembly 100. The cable control assembly 100 may control the cable 30 passively, i.e. the cable control assembly 100 may selectively constrain (i.e. resist by a frictional force or bias force, or even prevent) movement of the cable 30. The cable control assembly 100 need not actively move the cable 30. In some embodiments, however, the cable control assembly 100 may actively pull on the cable 30 so as to move the finger portion 20 relative to the base portion 10.

The cable control assembly 100 may be provided on the base portion 10, as schematically shown. However, in general, the cable control assembly 100 may also be provided on the finger portions 20, or be distributed between the base portion 10 and the finger portions 20. The end of the cable 30 that is not coupled to the finger portion 20 (herein referred to as the "proximal end" or "proximal portion") may be coupled to the cable control assembly 100. The cable control assembly 100 may provide haptic feedback to a user by constraining, i.e. resisting or even preventing, movement of the cable 30. Details and embodiments of the cable control assembly 100 are described below.

The cable control assembly 100 may comprise at least one constrain mechanism 120, for example in the form of a locking mechanism 120a, a braking mechanism 120b and/or a spring mechanism 120c. The cable control assembly 100 may selectively engage the constrain mechanism 120. So, the constrain mechanism 120 may selectively constrain movement of the cable 30 relative to the base portion 10. This selectively locks, brakes or otherwise resists (e.g. applies a force that opposes) movement of the finger portion 20 relative to the base portion 10, thereby providing haptic feedback to the user.

Optionally, the cable control assembly 100 comprises at least one retraction mechanism 110. The retraction mechanism 110 may retract the cable 30, for example upon un-bending of the finger portions 20. The retraction mechanism 110 may provide a continuous or permanent biasing force for retracting the cable 30. The retraction mechanism 110 may be embodied by a resilient element, such as a spring (e.g. compression or tension spring, or a torsion spring) that provides the biasing force. In some embodiments, a dedicated retraction mechanism 110 is not provided.

Optionally, the cable control assembly 100 may comprise a multi-cable coupling 170, thereby enabling multi-cable control. So, some provision may be made for the cable control assembly 100 to control multiple cables 30 simultaneously. Each or at least one of the retraction mechanism 110 and/or the constrain mechanism 120 may thus act on multiple cables 30 simultaneously, such that a single retraction mechanism 110 and/or constrain mechanism 120 may act on multiple cables 30. This may make the cable control assembly 100 more compact and simpler. Alternatively, the cable control assembly 100 may control each cable 30 independently. Each retraction mechanism 110 and/or the constrain mechanism 120 may thus act on a single cable 30 only, such that a dedicated retraction mechanism 110 and/or constrain mechanism 120 is provided for each cable 30. This may provide more accurate cable control, and thus improved haptic feedback.

Optionally, the cable control assembly 100 comprises a position sensing arrangement 190. The position sensing arrangement 190 may determine a position of a finger portion 20 relative to the base portion 10. The position sensing arrangement 190 may, for example, determine the position of the cable 30 relative to the base portion 20. A processor (not shown) or other control circuit may receive the position data and make a determination as to whether or not to provide haptic feedback at least in part based on the position data.

Optionally, the haptic glove 1 comprises one or more haptic actuators 200 for providing localized haptic feedback to a user. The one or more haptic actuators 200 may be provided on the finger portion 20 (for example near the fingertip of a user), to selectively provide a localized haptic sensation to a specific portion of the user's hand (for example to the fingertip of the user).

Details of the haptic glove 1 are described below. It will be appreciated that any of the embodiments of the structure of the base portion 10 and/or finger portion 20 may be combined with any of the embodiments of the cable control assembly 100 described below. Furthermore, even though the parts of the cable control assembly 100 are described below in relation to the haptic glove 1, it will be appreciated that these parts may find application in devices other than the haptic glove and may form embodiments of the present invention in their own right. Specifically, aspects of the constrain mechanism 120, including the locking mechanism 120a, the braking mechanism 120b and the spring mechanism 120c, as well as the latch mechanisms described below, need not be coupled to a cable 30 and/or a haptic glove 1 and may thus form inventions separate from the haptic glove 1 described herein.

### Structure of the haptic glove 1

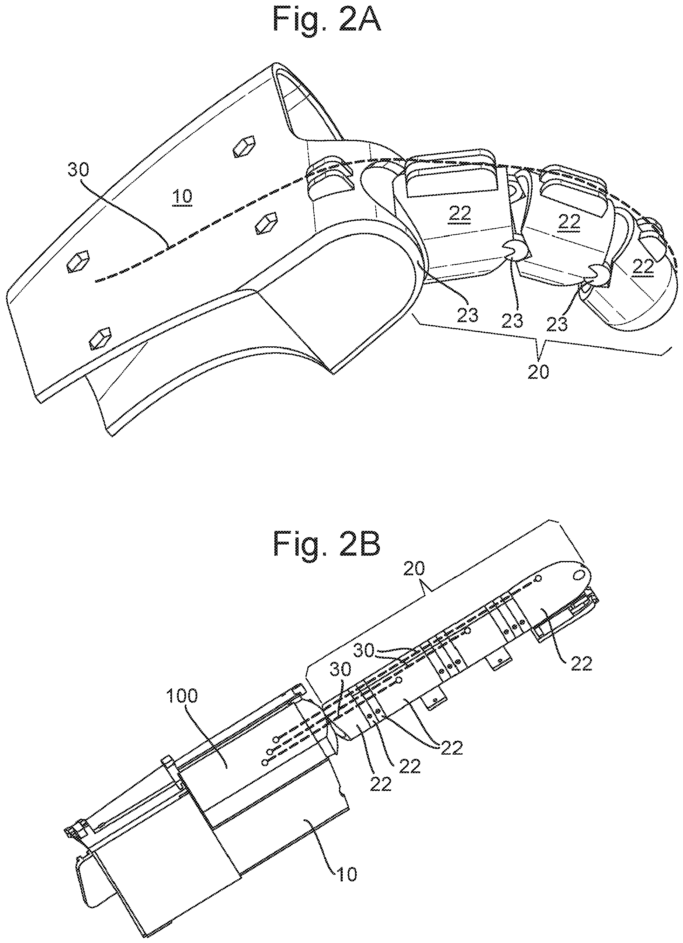

Figures 2A and 2B schematically illustrate examples of the structure of the haptic glove 1, comprising the base portion 10 and a finger portion20. Only a single finger portion 20 is shown for illustrative simplicity, but it will be appreciated that more than one finger portion 20 (e.g. five finger portions) may be provided. The depicted finger portions 20 comprise multiple finger segments 22, although in general a single finger segment 22 may be provided. Figure 2B also shows the cable control assembly 100 arranged on the base portion 10.

The base portion 10 is arranged, in use, to at least partially be arranged adjacent to a user's hand. Although not shown, the base portion 10 may extend over the wrist of a user's hand, thus providing additional space for other components of the haptic glove 1. In its simplest form, the base portion 10 may comprise a plate provided on the rear of a user's hand. The base portion 10 may be fixed relative to a user's hand, for example using suitable straps. The base portion 10 may also be worn on the user's hand, so as to partially or entirely surround a user's palm.

One or more (e.g. four or five) finger portions 20 may depend from the base portion 10. The finger portion 20 comprises a proximal end arranged next to the base portion 10 and a distal end arranged away from the base portion 10. Each finger portion 20 is to be arranged on or adjacent to a user's finger (where the thumb is considered to be one of the fingers). Each finger portion 20 may be pivotally arranged relative to the base portion 10, i.e. the distal end of each finger portion 20 may pivot relative to the base portion 10. The finger portion 20 may pivot or bend relative to the base portion 10 at least in a direction substantially orthogonal to a user's palm, so as to allow bending of the user's finger. The finger portion 20 may additionally be laterally movable relative to the base portion 10, i.e. in a plane substantially parallel to a user's palm, so as to allow for lateral movement of a user's finger. This avoids constraining natural movement of a user's finger, making the haptic glove 1 more comfortable to wear and providing a more natural feel to a user.

The haptic glove 1 may comprise five finger portions 20, one for each finger of a user's hand. In some embodiments, the haptic glove 1 may comprise fewer than five finger portions 20, for example four finger portions 20 (for surrounding a user's fingers other than the thumb) or fewer finger portions 20. In some embodiments, a finger portion 20 may be provided to be worn on multiple fingers. For example, a single finger portion 20 may be worn on the pinkie finger and ring finger of a user's hand together, such that the pinkie finger and ring finger move together.

In preferred embodiments, each finger portion 20 comprises one or more segments 22, e.g. a plurality of segments 22 mechanically connected in series so as to form a chain of linkages. The segments 22 may be pivotally movable with respect to each other and with respect to the base portion 10, so as to allow bending and/or curling of a user's finger while remaining adjacent to the user's finger. One or more bearings 23 may be provided between adjacent finger segments 22 and between the base portion 10 and the finger portion 20, so as to allow relative movement of the finger segments 22 relative to each other and relative to the base portion 10.

The haptic glove 1 comprises one or more cables 30. The haptic glove 1 may, for example, comprise one cable 30 per finger portion 20. This allows each finger portion 20 to be controlled independently.

In some embodiments, the haptic glove 1 comprises more than one cable 30 per finger portion 20, for example one cable 30 per phalanx of a user's finger. So, the haptic glove 1 may comprise two cables 30 per finger portion 20 corresponding to a thumb of a user, and three cables 30 per finger portion 20 corresponding to another finger of a user. Figure 2B, for example, depicts three cables 30 attached to finger segments 20 corresponding to different phalanxes of a user's hand. This may enable more accurate control of the shape of a user's finger allowed by the haptic glove 1 to provide haptic feedback. The haptic glove 1 may in general comprise any number of cables 30 per finger portion 20.

Figure 2A shows a finger portion 20 with three finger segments 22, one per phalanx of a user's finger. Figure 2B shows an alternative finger portion 20 with additional finger segments 22, allowing the finger portion to conform to different finger sizes of a user. In general, any number of finger segments 22 may form part of the finger portion 20. The finger portion 20 may be formed from a plurality (e.g. more than 10) finger segments 22 provided in a backbone-like arrangement, for example. The finger segments 22 need not all surround a user's finger, but some finger segments 22 may be provided at the back of a user's finger only. The number of cables 30 per finger portion 20 may be three, two or one regardless of the number of finger segments 22.

### Cable control assembly 100 for providing haptic feedback

As described above, controlling (in particular constraining) movement of the cable 30 (in particular of the proximal portion of the cable 30) may be used to provide haptic feedback to a user's hand. The figures described below schematically depict various aspects of the cable control assembly 100. The cable control assembly 100 may comprise or embody one or more of a retraction mechanism 110 for retracting the cable 30, a locking mechanism 120a for locking the proximal portion of the cable 30 in place, a brake mechanism 120b for braking movement of the proximal portion of the cable 30a, and a spring mechanism 120c for selectively applying a spring force to the proximal portion of the cable 30, in particular along the cable 30. A respective part of the cable control assembly 100 may be provided individually for each cable 30, or multiple cables 30 (e.g. all cables coupled to a finger portion 20) may be controlled by a single part of the cable control assembly 100, for example by coupling multiple cables using the multi-cable coupling 170. Described below are examples of parts of the cable control assembly 100 that achieve one or more of these functions.

According to the present invention, the cable control assembly 100 comprises a constrain mechanism 120. The constrain mechanism 120 is configured, when engaged, to constrain movement of the proximal end of a respective cable relative to the base portion, thereby constraining movement of a respective finger portion relative to the base portion. When the constrain mechanism 120 is disengaged movement of the proximal end of a respective cable relative to the base portion is not constrained by the constrain mechanism 120. The constrain mechanism 120 may be embodied by the locking mechanism 120a, the brake mechanism 120b and/or the spring mechanism 120c.

An SMA wire is arranged, on contraction, to engage or disengage the constrain mechanism 120.

### Constrain Mechanism 120

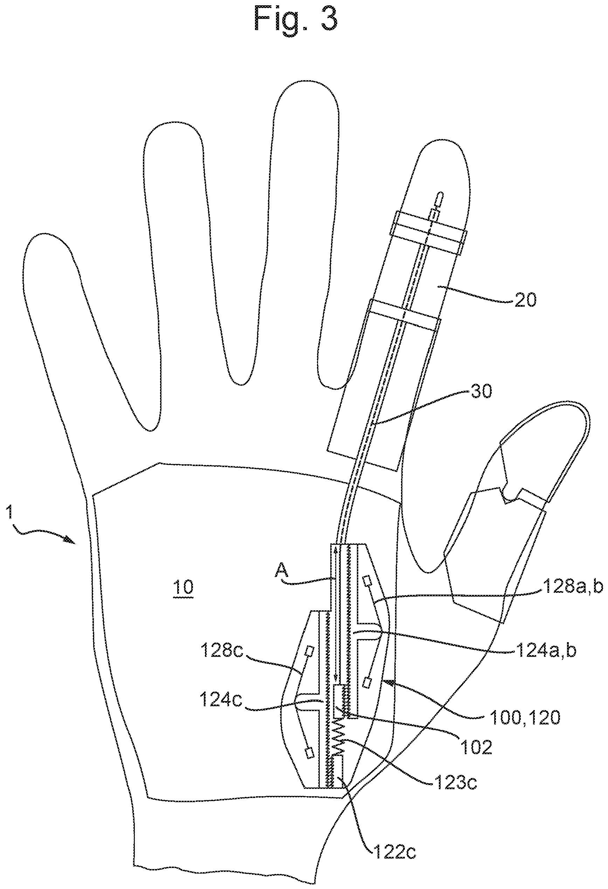

Figure 3 schematically shows a haptic glove 1 comprising a base portion 10, finger portion 20 and a cable 30. The structure of the haptic glove 1 may, for example, be as described in relation to Figs 2A and 2B.

The haptic glove 1 further comprises a cable control assembly 100. The cable control assembly 100 comprises a movable part 102 coupled to the proximal portion of the cable. The movable part 102 is arranged at the proximal end of the cable 30. Figure 2 depicts the movable part 102 as a part that is separate and connected to the cable 30, although in general the movable part 102 may form part of the cable 30. The movable part 102 may, for example, correspond to the proximal end of the cable 30. The movable part 102 is movable relative to the base portion 10 along a movement axis A that is substantially aligned with the proximal portion of the cable 30. In the depicted embodiment, the movable part 102 is movable in an up-down direction.

A constrain mechanism 120 is provided for selectively constraining movement of the proximal end of the cable 30. In the depicted embodiment, the constrain mechanism 120 is embodied by a locking or braking mechanism 120a,b in combination with a spring mechanism 120c. The constrain mechanism 120 is selectively engageable so as to provide haptic feedback.

Cable control assembly 100 comprises an intermediary part 124a,b and an SMA wire 128a,b. The intermediary part 124a,b is constrained from moving along the movement axis A. The SMA wire 128a,b, on contraction, moves the intermediary part 124a,b into engagement with the movable part 102, thereby constraining movement of the movable part 102 relative to the base portion 10. Using an SMA wire 128a,b may enable a particularly lightweight and compact mechanism. Although in the depicted embodiment the SMA wire, upon actuation (contraction) moves the intermediary part 124a,b into engagement, in alternative embodiments the SMA wire may move the intermediary part 124a,b out of engagement with the movable part 102.

Although not shown, the locking or braking mechanism 102 may further comprise a biasing element that biases the intermediary part 102 out of or into engagement with the movable part 102 or base portion 10. The SMA wire 128a,b is arranged, on actuation, to oppose the biasing force of the biasing element.

In further alternative embodiments, the intermediary part 124a,b may be constrained from moving along the movement axis relative to the movable part 102 (and so may move along the movement axis relative to the base portion 10). The intermediary part 124a,b may be brought into or out of engagement with the base portion 10 by the SMA wire 128a,b, thereby constraining movement of the movable part 102 relative to the base portion 10.

In the depicted embodiment, the SMA wire 128a,b is arranged to move the intermediary part 124a,b in a direction that is perpendicular to the movement axis A. In general, the SMA wire 128a,b may move the intermediary part 124a,b in any direction that is angled relative to the movement axis A.

In the depicted embodiment, the intermediary part 124a,b and the movable part 102 comprise engagement surfaces that are configured to engage each other. The engagement surfaces, on engagement, constrain sliding between the engagement surfaces. As depicted, each engagement surface may comprises a plurality of teeth, i.e. each engagement surface may be serrated. In such an embodiment, the constrain mechanism may act as a locking mechanism 120a, in that the movable part 102 may be locked in place when engaged by the intermediary part 124a. In general, however, the engagement surface may have any surface structure suitable for constraining relative sliding on engagement. The engagement surfaces may, for example, be relatively rough surfaces. In such an embodiment, the constrain mechanism may act as a braking mechanism 120b, in that the intermediary part 124b may brake movement of the movable part 102 when in engagement.

In the depicted embodiment, the two ends of the SMA wire 128 are fixed relative to the base portion 10. The SMA wire bends around a contact portion that is in contact with the intermediary part 124a,b, thereby forming two SMA portions on either side of the contact portion. The two SMA portions are angled relative to each other. Contraction of the SMA wire 128a,b (e.g. by driving the SMA wire 128a,b using a suitable drive current) urges the intermediary part 124a,b towards and into engagement with the movable part 102.

In alternative embodiments, the SMA wire 128a,b may be arranged differently to move the intermediary part 124a,b. For example, the SMA wire 128a,b may be connected between the intermediary part 124a,b and the base portion 10. Contraction of the SMA wire 128a,b thus directly moves the intermediary part 124a,b relative to the base portion 10. The intermediary part 124a,b may comprise a sliding surface that slidingly engages the base portion 10. The sliding surface may be angled relative to the movement axis A. The SMA wire may be arranged, on contraction, to move the intermediary part 124a,b along the sliding surface. Because the sliding surface is angled relative to the movement axis A, sliding along the movement axis A may bring the intermediary part 124a,b into or out of engagement with the movable part 102.

As shown in Figure 3, the constrain mechanism 120 may further comprise a second movable part 122c that is movable relative to the base portion 10, a second intermediary part 124c, and a second SMA wire 128c arranged, on actuation, to move the second intermediary part 124c into engagement with the second movable part 122c. Engagement of the second intermediary part 124c with the second movable part 124c constrains movement of the second movable part 124c relative to the base portion 10. The constrain mechanism further comprises a resilient element 123c, such as a spring, connected between the movable part 102 and the second movable part 122c.

When movement of the second movable part 122c relative to the base portion is constrained or even prevented, the first movable part 102 (and cable 30 connected thereto) may move against the spring force of the resilient element 123c. So, a spring force acts against movement of the first movable part 102 in the up-direction in Figure 3, and so curling of the respective finger portion 20 required a user to overcome the spring force. This may simulate squishing a virtual elastic object or pulling a trigger to a user.

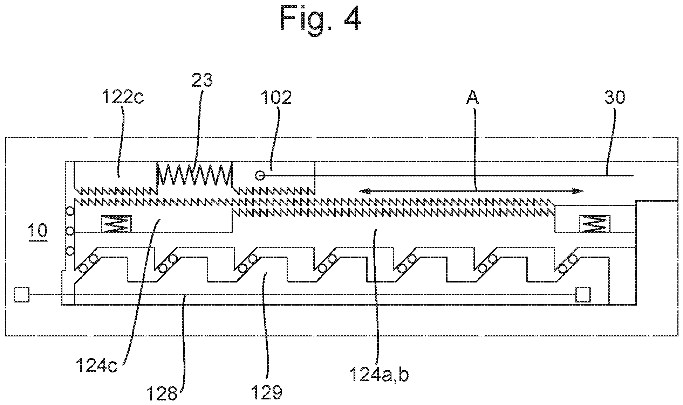

Figure 4 schematically depicts an alternative embodiment for engaging a constrain mechanism 120 to constrain movement of the proximal end of the cable 30. The movable part 102 is arranged at the proximal portion of the cable 30. The movable part 102 is movable relative to the base portion 10 along the movement axis A, which in the depicted embodiment extends in the left-right direction. Further provided are the second movable part 122c, and the resilient element 123c connected between the movable part 102 and second movable part 122c.

The cable control assembly 100 further comprises the intermediary part 124a,b and the second intermediary part 124c. When the intermediary part 124a,b is in engagement with the movable part 102, the proximal end of the cable 30 is constrained or even prevented from moving, giving the impression of holding a rigid object to the user, as explained above. When the second intermediary part 124c is in engagement with the second movable part 122c (and the intermediary part 124a,b is not in engagement with the movable part 102), moving the movable part 102 requires acting against the spring force of the resilient element 123c. This gives the impression of squishing an elastic object or pulling a trigger, as explained above.

Unlike in the embodiment depicted in Figure 3, only a single SMA wire 128 is provided to engage both the spring mechanism and the locking or brake mechanism. The single SMA wire 128 may move a further actuating part 129. The actuating part 129 comprises a first sliding surface for sliding relative to the base portion 10. The actuating part 129 further comprises a second sliding surface that allows relative sliding between the actuating part 129 and the intermediary part 124a,b. The intermediary part 124a,b is connected to the second intermediary part 124 via a spring or other resilient element. Actuation by the SMA wire 128 moves the actuation part 129 along the first sliding surface relative to the base portion 10. As a result, by sliding relative to the actuation part 129, the intermediary part 124a,b and second intermediary part 124c are urged towards the movable parts 102, 122c. The second intermediary part 124c is arranged to engage the second movable part 122c before the intermediary part 124a,b engages the movable part 102. So, in an intermediate actuation position of the SMA wire 128, the intermediary part 124c engages the second movable part 122c (and the intermediary part 124a,b does not engage the movable part 122c). Upon further actuation by the SMA wire 128, the intermediary part 124a,b is urged into engagement with the movable part 102.

The embodiment of Figure 4 thus allows use of a single SMA wire 128, in a two-step actuation process, to selectively constrain movement of only the second movable part 122c or of both the movable part 102 and the second movable part 122c.

### Multi-cable coupling 170

As explained above, the haptic glove 1 may in some embodiments comprise more than one cable 30 per finger portion 20, for example one cable 30 per phalanx of a user's hand. The shape of the finger portion 20 can thus be more accurately controlled compared to providing a single cable 30 per finger portion 20, enabling improved haptic feedback.

In general, each cable 30 of the multiple cables 30 per finger portion 20 may be controlled independently, either within the same cable control assembly 100 or by different cable control assemblies 100.

The multiple cables 30 coupled to a finger portion 20 may move by proportional amounts. For example, with reference to Figure 2B, a first cable 30 coupled a first finger segment 22 of the finger portion 20 may move by a first amount, and a second cable 30 coupled to a second finger segment 22 of the finger portion 20 may move by a second amount that is proportional to the first amount. When three cables are provided, a third cable 30 coupled to a third finger segment 22 of the finger portion 20 may move by a third amount that is proportional to the first amount. A cable 30 coupled to a relatively distal finger segment 22 may be allowed to move by a larger amount than a cable 30 coupled to a relatively proximal finger segment 22 (relative to the base portion 10). This allows natural curling of a user's finger.

The multiple cables 30 may be coupled to one another to enable such proportional movement. This allows the multiple cables 30 per finger portion 20 to be controlled simultaneously. Control is thus simplified, because a single cable control assembly 100 may be used to control multiple cables 30.

Figures 3A and 3B schematically show a plan view and a side view of one embodiment of a multi-cable coupling 170 for coupling multiple cables 30 together. In Figures 3A and 3B, the multi-cable coupling is in the form of a reel 175, in particular a multi-diameter reel 175. The multi-diameter reel 175 is, e.g., a rotatable drum or cylinder comprising portions 175A-C of multiple diameters. The cables 30 are wound on the reel 175.

The multi-diameter reel 175 comprises portions 175A-C with different diameters. Each portion 175A-C may be a cylinder or be considered a reel by itself. Different cables 30 are wound on portions of the reel with different diameters. The different cables 30 may be cables coupled to different finger segments 22 of the same finger portion 20, and so may be proportionally moved relative to each other. For example, a cable 30 coupled to a relatively distal finger segment 22 of the finger portion 20 (relative to the multi-diameter reel) may be wound on a relatively larger diameter portion 175C of the reel. A cable 30 coupled to a relatively proximal finger segment 22 of the finger portion 20 (relative to the multi-diameter reel) may be wound on a relatively smaller diameter portion 175A of the reel. This allows the cables 30 coupled to different finger segments 22 of the finger portion 20 to move proportionally, enabling the finger portion to allow a natural curling motion of a user's finger while simplifying control compared to a situation in which each cable 30 is controlled independently.

So, the portions of the reel 175 have different diameters, and allow for different movement of the different cables 30 relative to the base portion 10. Upon bending of a finger portion, for example, the proximal phalanx may bend less than the middle phalanx, which is turn bends less than the distal phalanx. As such, the cable 30 connected to the distal phalanx may move more relative to the base portion 10 than the cable connected to the middle phalanx and the cable connected to the proximal phalanx. The multi-cable coupling may apply gearing to the movement of the cables 30 relative to the base portion 10.

Another advantage of providing a reel on which the cable 30 is wound that relatively large cable movement is enabled within a relatively compact space. The excess cable length is neatly wound on the reel. In general, a single diameter reel may be provided to achieve these advantages without implementing multi-cable control 170.

### Movable part 102

The constrain mechanism 120 comprises a movable part 102 that is coupled to the proximal portion of the cable 30. The SMA wire 130 may, upon contraction, constrain movement of the movable part 102, thereby constraining movement of the cable 30.

The movable part 102 may be embodied by any part that is permanently coupled to the proximal portion of the cable 30. The movable part 102 may be any part that moves with the cable 30. In some embodiments, the movable part 102 is integrally formed with the cable 30 or is embodied by the proximal portion of the cable 30 itself.

Figures 3A and 3B show further examples of the movable part 102, or portions of the movable part 102. As shown in Figure 3A, the reel 175 may form the movable part 102. The constrain mechanism 120 may thus selectively engage the reel so as to constrain movement of the cable 30. Optionally, other parts may be coupled to the reel to form the movable part 102. For example, a further cable 102' may be coupled to the reel 175, e.g. a further portion of the reel 175 with different diameter. The constrain mechanism 120 may thus selectively constrain the further cable 102' or another part coupled to the further cable 102. Alternatively, a rack 102" may be coupled to the reel 175, for example by engaging teeth of a gear forming part of the reel 175. The constrain mechanism 120 may thus selectively constrain movement of the rack 102".

In general, the movable part 102 may be any part that is movable with the cable 30. The movable part 102 may be rotationally movable (like the reel 175) or may be translationally movable (like the rack 102"). In general, the reel 175 of Figure 3 need not be provided.

### Retraction mechanism 110

The cable control mechanism 100 may comprise a retraction mechanism 110 for retracting the cable upon unbending of the finger portions. The retraction mechanism 110 may be embodied by any resilient element permanently coupled to the movable part 102 and capable of retracting the cable 30. Preferably, the resilient element is capable of retracting the cable 30 over the entire movement range of the cable 30.

The retraction mechanism may be embodied by a torsion spring, for example for applying a torque to the reel 175 for retracting the cable 30. The retraction mechanism 110 may alternatively be embodied by a tension or compression spring, for example coupled to a movable part in the form of a rack 102" or the coupling cable 102'. The retraction mechanism 110 may also act directly on the cable, for example by a spring connected directly to the proximal end of the cable 30.

### Latch

In the embodiments described in relation to Figures 3 and 4, the SMA wire 128 may acts directly to selectively to engage and/or disengage the constrain mechanism 120. The SMA wire 128 may be required to continuously be powered to keep the constrain mechanism 120 engaged or disengaged.

In some advantageous embodiments, a latch 200 is used to selectively engage and/or disengage the constrain mechanism 120. The latch assembly may require powering only during switching the constrain mechanism 120 into or out of engagement. The latch arrangement may not require power for keeping the constrain mechanism 120 engaged and disengaged.

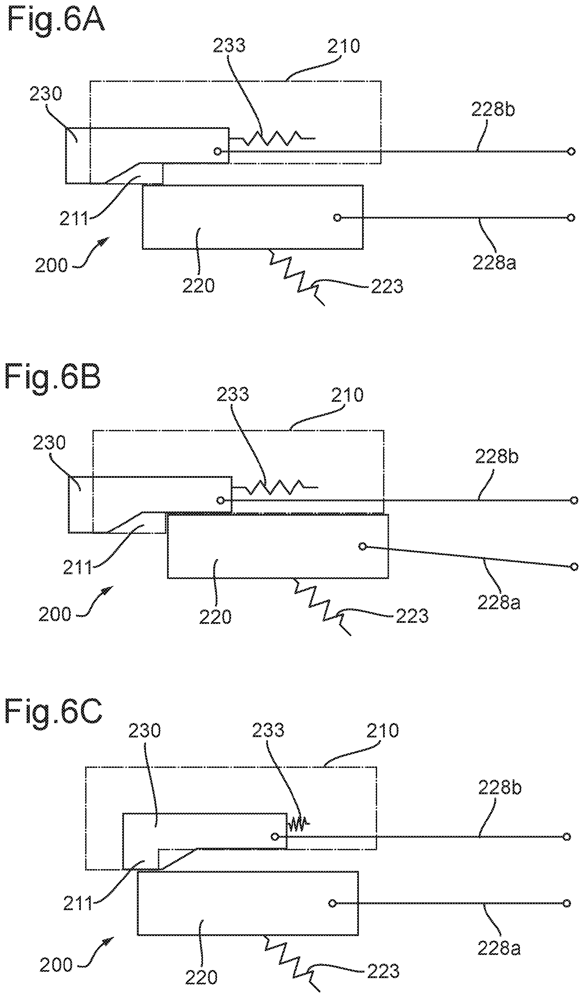

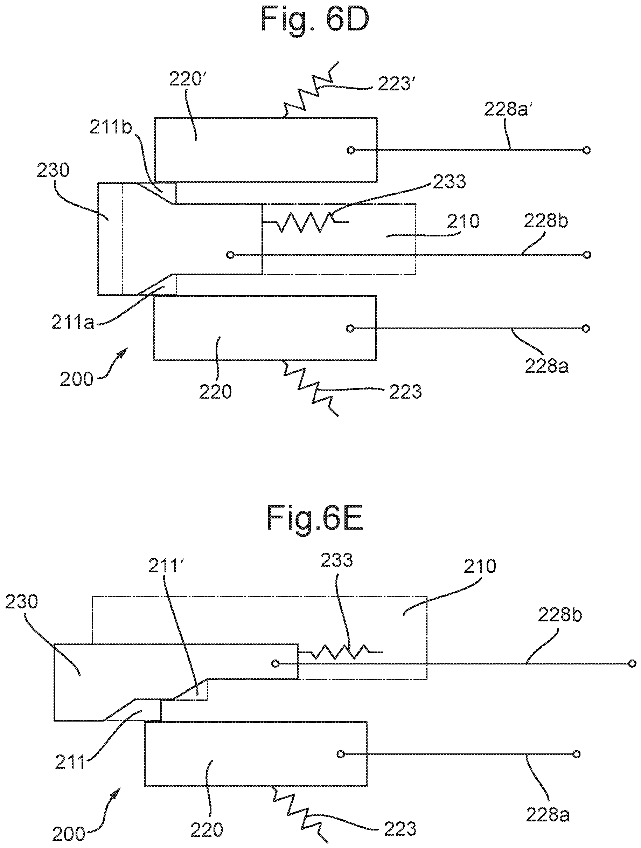

Figure 6 schematically shows an example of a latch 200. The latch 200 is a bi-stable latch assembly. So, the latch comprises a latching part movable between an unlatched position and a latched position.

The latch 200 comprises a support structure 210. The support structure 210 is used herein as a reference point, relative to which movement of other components of the latch 200 is described (unless otherwise indicated). When integrated into the haptic glove 1, the support structure 210 may be fixed relative to the base portion 10, for example by being fixedly attached to the base portion 10 or integrally formed with the base portion 10.

The latch 200 further comprises a latching part 220 and a biasing element 223. The latching part 220 is movably arranged relative to the support structure 210. The biasing element 223 biases the latch part 220 against the support structure 210.

The support structure 210 comprises a catching portion 211, in the form of a step 211 in Figure 6. The catching portion 211 may catch a corresponding portion of the latch part 220 under action of the biasing element 223, such that the latching part 220 is caught in place by the catching portion 211. Movement of the latch part 220 relative to the support structure 210 is thus constrained.

The latch assembly 200 further comprises an SMA wire 228a. The SMA wire 228 is arranged, on contraction, to move the latch part 220 from an unlatched position into a latched position in which the latch part 220 catches the catching portion 211 under action of the biasing element 223 such that movement of the latch part 220 is constrained.

In addition, the latch assembly 200 comprises a release mechanism for releasing the latch part 220 from the latched position into the unlatched position. The release mechanism releases the latch part 220 from the catching portion 211 of the support structure 210, such that the latch part 220 returns, under action of the biasing element 223, to the unlatched position.

With reference to Figures 6A-C, operation of the latch assembly 200 is described. Figure 6A depicts the latch 200 in an unlatched position. The biasing element 223 biases the latching part 220 against the support structure 210. The support structure 210 comprises a catching portion 211 in the form of a step, separating an upper surface from a lower surface. The latch part 220 is biased against the upper surface of the support structure 210 by the biasing element 223.

Figure 6B depicts the latch 200 in a latched position. The transition from Figure 6A to 6B is achieved by contraction of the SMA wire 228a. Upon contraction, the latch part 220 slides along the upper surface of the support structure 210 until it drops off the step (catching portion 211) onto the lower surface. The latch part 220 is then held in place on the step by the biasing element 223.

Figure 6C depicts the latch assembly 200 in an unlatched position. The transition from Figure 6C to 6C is achieved by contraction of the SMA wire 228b. Contraction of the SMA wire 228b slides a release part 230 relative to the support structure 210. The release part 230 comprises an angled surface for lifting the latch part 220 off the step 211. The latch part 220 slides back into the unlatched position under action of the biasing element 223.

In general, the release mechanism may comprise any other mechanism for releasing the latch part 220 from the catching portion 211 of the support structure 210, such as any mechanism capable of lifting the latch part 220 over the step 211 or other catching portion 211 of the support structure 210.

Figure 6D discloses another embodiment of a latch assembly 200. The latch assembly 200 comprises two latch parts 220, 220' that may be individually brought into latched positions by respective SMA wires 228a, 228a'. The latch assembly 200 comprises a single release part 230 that, under the action of a single SMA wire 228b, may release both of the latch parts 220, 220' from the latched positions into the unlatched positions. This allows for a more compact assembly compared to using two latch assemblies of Fig 6A.

Figure 6E discloses another embodiment of the latch assembly 200. The latch assembly 200 allows for the latch part 220 to selectively move between three positions. The latch assembly 200 may thus be considered a tri-stable latch assembly.

In particular, contracting the SMA wire 228a by a first amount leads to the latch part 220 falling off the first step 211 of the support structure 210. Contracting the SMA wire 228a further, by a second amount, leads to the latch part 220 falling off the second step 211' of the support structure 210. The support structure 210 thus comprises two catching portions 211, 211' that sequentially catch the latch part 220 in two different positions. The release part may be configured to either release the latch part 220 from both latched positions simultaneously (such that the latch part 220 is released directly to the unlatched position form either first and second latched position), or to release the latch part 220 sequentially from the second and first latched positions (such that contraction of the SMA wire 228a' by a first amount releases the latch part 220 from the second latched position to the first latched position, and further contraction by a second amount released the latch part 220 from the first latched position to the unlatched position).

Although the latch assembly 200 of Fig 6E comprises two catching portions 211, 211', and so the latch part 210 may be moved between three positions (an unlatched position and two latched positions), it will be appreciated that the latch assembly 200 may comprise any number of catching portions 211, 211' such that the latch part 210 may be moved between any number of positions.

The multi-stage latch 200 of Fig 6E may be used to vary the frictional force of a brake mechanism 120b, for example. Alternatively, the multi-stage latch 200 may be used to selectively engage or disengage multiple different constrain mechanisms, for example when combined with the arrangement of Figure 4.

### Embodiments of cable control assembly

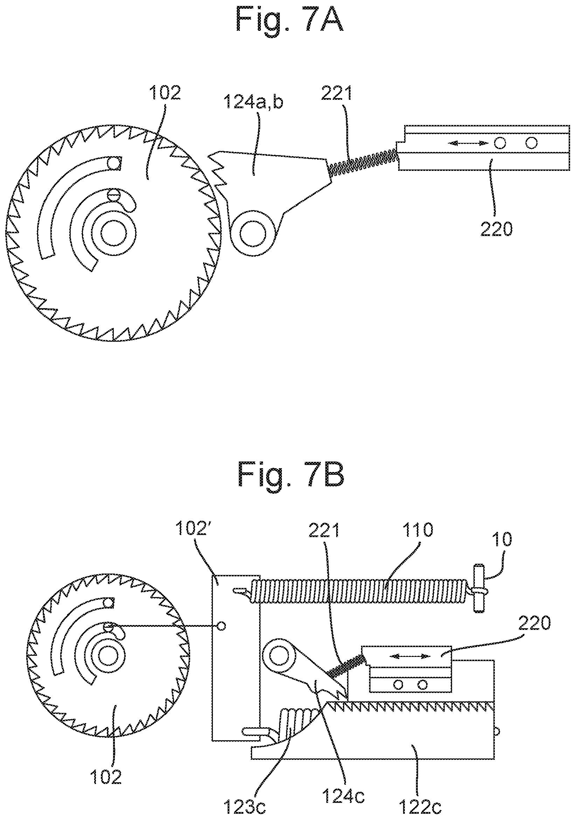

Figures 7A-D schematically depict embodiments of a cable control assembly 100. The cable control assembly 100 may be selectively engageable using the latch mechanism 200 described above, for example.

Figure 7A shows a constrain mechanism 120 in the form of a locking mechanism 120. The latch part 220 may be movable between a latched and an unlatched position. The latch part 220 is coupled to the intermediary part 124a via a resilient element 221, such as a spring. Presence of the resilient element 221 allows for some resilience so as to prevent damaging the teeth of the movable part 102 and intermediary part 124a, for example. When the latch part 102 is in the latched position (not shown), the teeth of the intermediary part 124a engage with the teeth of the movable part 102 to thereby constrain rotation of the movable part 102. When the latch part 102 is in the unlatched position (as shown), the movable part 102 may be free to rotate.

Figure 7B shows another portion of the cable control assembly 100. As shown, the control cable 102b may be connected to another movable part 102'. The combination of movable part 102, control cable 102b and movable part 102' may be considered to correspond to one movable part 102, in that movement of one of these parts may constrain movement of the combination as a whole. A retraction mechanism 110 in the form of a spring is connected to the movable part 102', thereby applying a retraction force for retracting the cable 30.

Furthermore, a spring mechanism 120c is selectively engageable with the movable part 102'. When the latch part 220 is disengaged (as shown), the second movable part 122 may move with the movable part 102' such that no spring force is applied by the spring mechanism 120c. When the latch part 220 is engaged (not shown), then the second movable part 122 is constrained from moving relative to the base portion 10. A spring force is applied by resilient element 123 to the movable part 102', thereby applying an additional spring force to the cables 30. The resilient element 123 may have a comparable or higher stiffness than the retraction mechanism 110.

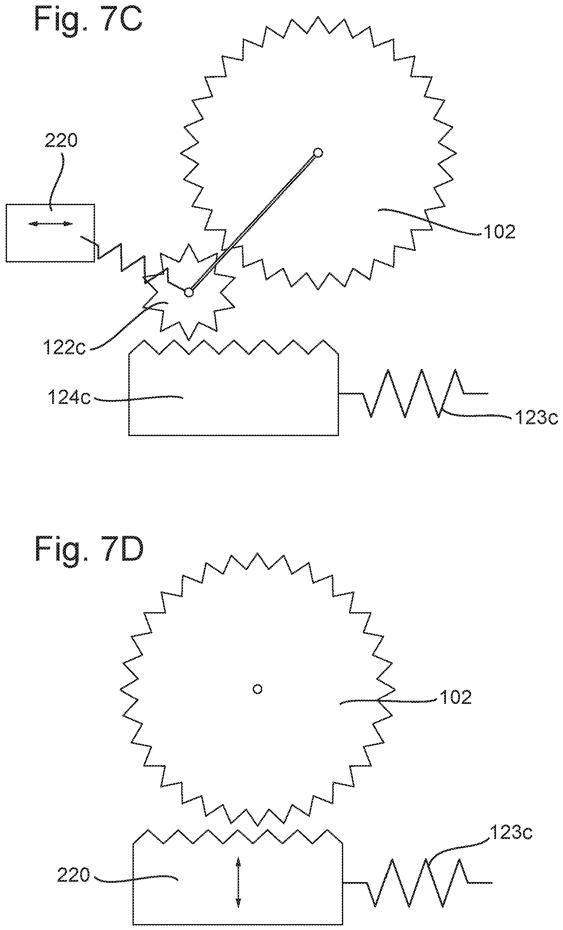

Figure 7C schematically depicts another embodiment of a spring mechanism 120c. In this embodiment, the second movable part 122c is a movable gear that may be moved into and out of engagement with at least one of the movable part 102 and the intermediary part 124c. When in engagement, a spring force of the resilient element 123c is applied to the movable part.

Figure 7D schematically depicts another embodiment of a spring mechanism 120c. In this embodiment, the latch part 220 may directly engage the movable part 102 so as to apply the spring force of the resilient element 123c.

It will be appreciated that the spring mechanism 120c of Figures 7B-D may be replaced with a locking mechanism 120a or a braking mechanism 120b by effectively replacing the resilient element 123c with a rigid part.

### Final paragraphs

The term 'shape memory alloy (SMA) wire' may refer to any element comprising SMA. The SMA wire may have any shape that is suitable for the purposes described herein. The SMA wire may be elongate and may have a round cross section or any other shape cross section. The cross section may vary along the length of the SMA wire. It is also possible that the length of the SMA wire (however defined) may be similar to one or more of its other dimensions. The SMA wire may be pliant or, in other words, flexible. In some examples, when connected in a straight line between two elements, the SMA wire can apply only a tensile force which urges the two elements together. In other examples, the SMA wire may be bent around an element and can apply a force to the element as the SMA wire tends to straighten under tension. The SMA wire may be beam-like or rigid and may be able to apply different (e.g. non-tensile) forces to elements. The SMA wire may or may not include material(s) and/or component(s) that are not SMA. For example, the SMA wire may comprise a core of SMA and a coating of non-SMA material. Unless the context requires otherwise, the term 'SMA wire' may refer to any configuration of SMA wire acting as a single actuating element which, for example, can be individually controlled to produce a force on an element. For example, the SMA wire may comprise two or more portions of SMA wire that are arranged mechanically in parallel and/or in series. In some arrangements, the SMA wire may be part of a larger piece of SMA wire. Such a larger piece of SMA wire might comprise two or more parts that are individually controllable, thereby forming two or more SMA wires.

Whilst the embodiments above have described actuator assemblies which use SMA wires, the skilled person will appreciate that the features of the bearing arrangements and the flexures described can be readily used with other forms of actuator components. For example, each actuator component may be a voice coil motor (VCM) actuator, but other types of actuator are possible, for example a piezoelectric actuator, a radial motor or others.

## Claims

1. Haptic glove (1) for providing haptic feedback to a user's hand, the haptic glove (1) comprising:
a base portion (10) and one or more finger portions (20) extending from the base portion (10), wherein each finger portion (20) is pivotally movable relative to the base portion (10), and
one or more cables (30), each comprising a distal end connected to a respective finger portion (20) and a proximal end extending towards the base portion (10); and
one or more cable control assemblies (100), at least one cable control assembly (100) comprising:
a constrain mechanism (120) configured, when engaged, to constrain movement of the proximal end of a respective cable relative to the base portion (10), thereby constraining movement of a respective finger portion (20) relative to the base portion (10), and
**characterised in that**
the at least one cable control assembly (100) further comprising:
an SMA wire (128) arranged, on contraction, to engage or disengage the constrain mechanism (120).

2. A haptic glove (1) according to claim 1, wherein the at least one cable control assembly (100) comprises the constrain mechanism (120) in the form of i) a locking mechanism (120a) configured, when engaged, to prevent movement of the proximal end of the respective cable (30) relative to the base portion (10) and/or ii) a braking mechanism (120b) configured, when engaged, to apply a frictional force to the proximal end of the respective cable (30).

3. A haptic glove (10) according to any preceding claim, wherein the at least one cable control assembly (100) comprises the constrain mechanism (120) in the form of a spring mechanism (120c) configured, when engaged, to apply a bias force along the respective cable (30).

4. A haptic glove (1) according to claim 3 in combination with claim 2, wherein the constrain mechanism (120) further comprises constrain mechanisms (120) in the form of i) the spring mechanism (120c) and ii) at least one of the locking and braking mechanism (120a, 120b), optionally wherein the at least one cable control assembly (100) comprises either
a) at least two SMA wires (128), wherein one SMA wire (128a,b) is arranged selectively to engage or disengage the locking or braking mechanism (120a, b) and another SMA wire (128c) is arranged selectively to engage or disengage the spring mechanism (120c),
or b) an SMA wire (128) arranged, on initial contraction, to i) engage the spring mechanism (120c) or ii) disengage the locking or braking mechanism (120a,b) and, on further contraction, to respectively i) engage the locking or braking mechanism (120a,b) or ii) disengage the spring mechanism (120c).

5. A haptic glove (1) according to any one of the preceding claims, wherein the at least one cable control assembly (100) comprises a retraction mechanism (110) configured to permanently apply a retracting bias force along the cable (30).

6. A haptic glove (1) according to any one of the preceding claims, wherein the at least one cable control assembly (100) comprises a movable part (102) that is coupled to the proximal portion of the cable (30),
optionally wherein the movable part (102) comprises a reel (175) and the cable (30) is wound on the reel (175),
further optionally wherein the reel (175) is a multi-diameter reel comprising portions with different diameters, and different cables (30) are wound on the portions of the reel with different diameters and/or wherein each finger portion (20) comprises a plurality of finger segments (22), and different cables (30) are connected at their distal ends to different finger segments (22) of a respective finger portion (20), wherein the different cables (30) are wound on parts of the reel (175) with different diameters.

7. A haptic glove (1) according to any one of the preceding claims, wherein the at least one cable control assembly (100) comprises an intermediary part (124), and wherein the SMA wire (128) is arranged to move the intermediary part (124) so as to engage or disengage the constrain mechanism (120), optionally wherein the intermediary part (124) is arranged to pivot so as to engage or disengage the constrain mechanism (120) and/or wherein the SMA wire (128) is coupled to the intermediary part (124) via a resilient element (221).

8. A haptic glove (1) according to any preceding claim in combination with claims 5 and 7, wherein the SMA wire (128) is arranged to move the intermediary part (124) into or out of engagement with the movable part (102) so as to engage or disengage the constrain mechanism (120),
optionally wherein the intermediary part (124) and the movable part (102) comprise engagement surfaces for engaging each other, wherein the engagement surfaces are configured, on engagement, to constrain sliding between the intermediary part (124) and the movable part (102), further optionally wherein each engagement surface comprises a plurality of complementary teeth.

9. A haptic glove (1) according to any one of the preceding claims, wherein the cable control assembly (100) comprises a latch (200), the latch (200) comprising a latching part (220) movable between a latched position and an unlatched position, and wherein the SMA wire (228a) is arranged, on contraction, to move the latching part (220) into the latched position, thereby engaging or disengaging the constrain mechanism (120),
optionally wherein a release SMA wire (228b) is arranged, on contraction, to move the latching part (220) into the unlatched position, thereby respectively disengaging or engaging the constrain mechanism (120).

10. A haptic glove (1) according to claim 9, wherein the latch (200) is configured to remain in the latched or unlatched position when the SMA wire (228a, b) ceases to be energized.

11. A haptic glove (1) according to any one of claims 9 or 10, wherein the latch (200) comprises
a support structure (210) comprising first and a second surface separated by a step (211),
a latching part (220) slidable along the first and/or second surfaces between the unlatched position engaging the first surface and the latched position engaging the step (211) and second surface, and
a biasing element (223) arranged to bias the latching part (220) against the step (211) and the first and/or second surfaces,
wherein the SMA wire (228a) is arranged, on contraction, to move the latching part (220) along the first surface into the latched position under bias of the biasing element (223) so as to engage or disengage the constrain mechanism (120), optionally wherein a release SMA wire (228b) is arranged, on contraction, to move the latching part (220) over the step (211) into the unlatched position under bias of the biasing element (223).

12. A haptic glove (1) according to claim 11,
wherein the support structure (210) comprises a second set of first and second surfaces separated by a second step (211b),
and wherein the latch (200) further comprises:
a second latching part (220') slidably arranged along the second set of first and/or second surfaces between an unlatched position engaging the respective first surface and a latched position engaging the respective step (211b) and second surface, and
a second SMA wire (228a') arranged, on contraction, to move the second latching part (220') along the respective first surface into the latched position under bias of a second biasing element (223');
wherein the latching part (220) in its latched position is arranged to engage or disengage a first constrain mechanism (120), and the second latching part (220') in its latched position is arranged to engage or disengage a second constrain mechanism (120), and
wherein the release SMA wire (228b) is arranged, on contraction, to move both the latching part (220) and the second latching part (220') over the respective step (211a, 211b) into the respective unlatched position under bias of the respective biasing element (223, 223').

13. A haptic glove (1) according to any one of claims 11 or 12, wherein the support structure (210) comprises a third surface separated from the second surface by a second step (211'),
wherein the latching part (220) is slidably arranged along the first, second and/or third surfaces between the unlatched position engaging the first surface, a first latched position engaging the step (211) and second surface and a second latched position engaging the second step (211') and the third surface,
optionally wherein the release SMA wire (228b) is arranged to move the latching part (220) from either of the first or second latched positions into the unlatched position under bias of the biasing element (223).

14. A haptic glove (1) according to claim 13, wherein the release SMA wire (223) is arranged, on initial contraction, to move the latching part (220) from the second latched position over the second step (211') into the first latched position under bias of the biasing element (223), and, on further contraction, to move the latching part (220) from the first latched position over the first step (211) into the unlatched position under bias of the biasing element (223).

## Patentansprüche

1. Haptischer Handschuh (1) zum Bereitstellen einer haptischen Rückmeldung für die Hand eines Benutzers, wobei der haptische Handschuh (1) umfasst:
einen Basisabschnitt (10) und einen oder mehrere Fingerabschnitte (20), die sich von dem Basisabschnitt (10) erstrecken, wobei jeder Fingerabschnitt (20) relativ zu dem Basisabschnitt (10) gelenkig beweglich ist, und
ein oder mehrere Kabel (30), die jeweils ein distales Ende, das mit einem jeweiligen Fingerabschnitt (20) verbunden ist, und ein proximales Ende umfassen, das sich in Richtung des Basisabschnitts (10) erstreckt; und
eine oder mehrere Kabelsteuerungsanordnungen (100), wobei wenigstens eine Kabelsteuerungsanordnung (100) umfasst:
einen Begrenzungsmechanismus (120), der dazu konfiguriert ist, wenn er in Eingriff steht, die Bewegung des proximalen Endes eines jeweiligen Kabels relativ zu dem Basisabschnitt (10) zu begrenzen, wobei dadurch die Bewegung eines jeweiligen Fingerabschnitts (20) relativ zu dem Basisabschnitt (10) begrenzt wird, und
**dadurch gekennzeichnet, dass** die wenigstens eine Kabelsteuerungsanordnung (100) umfasst:
einen SMA-Draht (128), der angeordnet ist, um beim Zusammenziehen in den Begrenzungsmechanismus (120) einzugreifen oder sich aus diesem zu lösen.

2. Haptischer Handschuh (1) nach Anspruch 1, wobei die wenigstens eine Kabelsteuerungsanordnung (100) den Begrenzungsmechanismus (120) in Form von i) einem Verriegelungsmechanismus (120a), der dazu konfiguriert ist, wenn er in Eingriff steht, eine Bewegung des proximalen Endes des jeweiligen Kabels (30) relativ zu dem Basisabschnitt (10) zu verhindern, und/oder ii) einem Bremsmechanismus (120b) umfasst, der dazu konfiguriert ist, wenn er in Eingriff steht, eine Reibungskraft auf das proximale Ende des jeweiligen Kabels (30) auszuüben.

3. Haptischer Handschuh (10) nach einem der vorhergehenden Ansprüche, wobei die wenigstens eine Kabelsteuerungsanordnung (100) den Begrenzungsmechanismus (120) in der Form eines Federmechanismus (120c) umfasst, der dazu konfiguriert ist, wenn er in Eingriff steht, eine Vorspannkraft entlang des jeweiligen Kabels (30) auszuüben.

4. Haptischer Handschuh (1) nach Anspruch 3 in Verbindung mit Anspruch 2, wobei der Begrenzungsmechanismus (120) ferner Begrenzungsmechanismen (120) in der Form von i) dem Federmechanismus (120c) und ii) wenigstens einem des Verriegelungs- und des Bremsmechanismus (120a, 120b) umfasst,
optional wobei die wenigstens eine Kabelsteuerungsanordnung (100) entweder umfasst:
a) wenigstens zwei SMA-Drähte (128), wobei ein SMA-Draht (128a, b) angeordnet ist, um selektiv in den Verriegelungs- oder Bremsmechanismus einzugreifen oder sich von diesem zu lösen, und ein anderer SMA-Draht (128c) angeordnet ist, um selektiv in den Federmechanismus (120c) einzugreifen oder sich von diesem zu lösen,
oder b) einen SMA-Draht (128), der angeordnet ist, um beim anfänglichen Zusammenziehen i) in den Federmechanismus (120c) einzugreifen oder ii) sich von dem Verriegelungs- oder Bremsmechanismus (120a, b) zu lösen und bei weiterem Zusammenziehen jeweilig i) in den Verriegelungs- oder Bremsmechanismus (120a, b) einzugreifen oder ii) sich von dem Federmechanismus (120c) zu lösen.

5. Haptischer Handschuh (1) nach einem der vorhergehenden Ansprüche, wobei die wenigstens eine Kabelsteuerungsanordnung (100) einen Rückzugsmechanismus (110) umfasst, der dazu konfiguriert ist, permanent eine Vorspannkraft entlang des Kabels (30) auszuüben.

6. Haptischer Handschuh (1) nach einem der vorhergehenden Ansprüche, wobei die wenigstens eine Kabelsteuerungsanordnung (100) ein bewegliches Teil (102) umfasst, das mit dem proximalen Abschnitt des Kabels (30) gekoppelt ist,
optional wobei der bewegliche Teil (102) eine Trommel (175) umfasst und das Kabel (30) auf der Trommel (175) aufgewickelt ist,
optional wobei ferner die Trommel (175) eine Trommel mit mehreren Durchmessern ist, die Abschnitte mit unterschiedlichen Durchmessern aufweist, und verschiedene Kabel (30) auf die Abschnitte der Trommel mit unterschiedlichen Durchmessern gewickelt sind und/oder wobei jeder Fingerabschnitt (20) eine Mehrzahl von Fingersegmenten (22) umfasst, und verschiedene Kabel (30) an ihren distalen Enden mit verschiedenen Fingersegmenten (22) eines jeweiligen Fingerabschnitts (20) verbunden sind, wobei die verschiedenen Kabel (30) auf Teile der Trommel (175) mit unterschiedlichen Durchmessern gewickelt sind.

7. Haptischer Handschuh (1) nach einem der vorhergehenden Ansprüche, wobei die wenigstens eine Kabelsteuerungsanordnung (100) ein Zwischenteil (124) umfasst, wobei der SMA-Draht (128) angeordnet ist, um das Zwischenteil (124) zu bewegen, um in den Begrenzungsmechanismus (120) einzugreifen oder sich von diesem zu lösen, wobei optional das Zwischenteil (124) angeordnet ist, sich zu schwenken, um in den Begrenzungsmechanismus (120) einzugreifen oder sich von diesem zu lösen, und/oder wobei der SMA-Draht (128) mit dem Zwischenteil (124) über ein elastisches Element (221) gekoppelt ist.

8. Haptischer Handschuh (1) nach einem der vorhergehenden Ansprüche in Kombination mit den Ansprüchen 5 und 7, wobei der SMA-Draht (128) angeordnet ist, um das Zwischenteil (124) in oder aus dem Eingriff mit dem beweglichen Teil (102) zu bewegen, um in den Begrenzungsmechanismus (120) einzugreifen oder sich aus diesem zu lösen,
optional wobei das Zwischenteil (124) und das bewegliche Teil (102) Eingriffsoberflächen zum gegenseitigen Eingriff umfassen, wobei die Eingriffsoberflächen dazu konfiguriert sind, beim Eingriff das Gleiten zwischen dem Zwischenteil (124) und dem beweglichen Teil (102) zu begrenzen, ferner optional wobei jede Eingriffsoberfläche eine Mehrzahl von komplementären Zähnen umfasst.

9. Haptischer Handschuh (1) nach einem der vorhergehenden Ansprüche, wobei die Kabelsteuerungsanordnung (100) eine Verriegelung (200) umfasst, wobei die Verriegelung (200) ein Verriegelungsteil (220) umfasst, das zwischen einer verriegelten Position und einer entriegelten Position beweglich ist, wobei der SMA-Draht (228a) angeordnet ist, um das Verriegelungsteil (220) beim Zusammenziehen in die verriegelte Position zu bewegen, wobei dadurch in den Begrenzungsmechanismus (120) eingegriffen wird oder sich von diesem gelöst wird,
optional wobei ein Freigabe-SMA-Draht (228b) angeordnet ist, um beim Zusammenziehen das Verriegelungsteil (220) in die entriegelte Position zu bewegen, wobei dadurch jeweilig in den Begrenzungsmechanismus (120) eingegriffen wird oder sich von diesem gelöst wird.

10. Haptischer Handschuh (1) nach Anspruch 9, wobei die Verriegelung (200) dazu konfiguriert ist, in der verriegelten oder entriegelten Position zu verbleiben, wenn der SMA-Draht (228a, b) aufhört, erregt zu werden.

11. Haptischer Handschuh (1) nach einem der Ansprüche 9 oder 10, wobei die Verriegelung (200) umfasst:
eine Trägerstruktur (210), die eine erste und eine zweite Oberfläche umfasst, die durch eine Stufe (211) getrennt sind,
ein Verriegelungsteil (220), das entlang der ersten und/oder der zweiten Oberfläche zwischen der entriegelten Position, die in die erste Oberfläche eingreift, und der verriegelten Position, die in die Stufe (211) und die zweite Oberfläche eingreift, gleitbar ist, und
ein Vorspannelement (223), das angeordnet ist, um das Verriegelungsteil (220) gegen die Stufe (211) und die ersten und/oder die zweiten Oberflächen vorzuspannen, und
wobei der SMA-Draht (228a) angeordnet ist, um beim Zusammenziehen das Verriegelungsteil (220) entlang der ersten Oberfläche in die verriegelte Position unter der Vorspannung des Vorspannelements (223) zu bewegen, um in den Begrenzungsmechanismus (120) einzugreifen oder sich von diesem zu lösen, wobei optional ein Freigabe-SMA-Draht (228b) angeordnet ist, um beim Zusammenziehen den verriegelnden Teil (220) über die Stufe (211) in die entriegelte Position unter der Vorspannung des Vorspannelementes (223) zu bewegen.

12. Haptischer Handschuh (1) nach Anspruch 11,
wobei die Trägerstruktur (210) einen zweiten Satz von ersten und zweiten Oberflächen umfasst, die durch eine zweite Stufe (211b) getrennt sind,
und wobei die Verriegelung (200) ferner umfasst:
ein zweites Verriegelungsteil (220'), das entlang des zweiten Satzes von ersten und/oder zweiten Oberflächen zwischen einer entriegelten Position, die in die jeweilige erste Oberfläche eingreift, und einer verriegelten Position gleitend angeordnet ist, die in die jeweilige Stufe (211b) und die zweite Oberfläche eingreift, und
einen zweiten SMA-Draht (228a'), der angeordnet ist, um beim Zusammenziehen das zweite Verriegelungsteil (220') entlang der jeweiligen ersten Oberfläche in die verriegelte Position unter der Vorspannung eines zweiten Vorspannelements (223') zu bewegen,
wobei das Verriegelungsteil (220) in seiner verriegelten Position angeordnet ist, um in einen ersten Begrenzungsmechanismus (120) einzugreifen oder sich von diesem zu lösen, und das zweite Verriegelungsteil (220') in seiner verriegelten Position angeordnet ist, um in einen zweiten Begrenzungsmechanismus (120) einzugreifen oder sich von diesem zu lösen, und
wobei der Freigabe-SMA-Draht (228b) angeordnet ist, um beim Zusammenziehen sowohl das Verriegelungsteil (220) als auch das zweite Verriegelungsteil (220') über die jeweilige Stufe (211a, 211b) in die jeweilige entriegelte Position unter Vorspannung des jeweiligen Vorspannelements (223, 223') zu bewegen.

13. Haptischer Handschuh (1) nach einem der Ansprüche 11 oder 12, wobei die Trägerstruktur (210) eine dritte Oberfläche umfasst, die von der zweiten Oberfläche durch eine zweite Stufe (211') getrennt ist,
wobei das Verriegelungsteil (220) entlang der ersten, zweiten und/oder dritten Oberfläche zwischen der entriegelten Position, die in die erste Oberfläche eingreift, einer ersten verriegelten Position, die in die Stufe (211) und die zweite Oberfläche eingreift, und einer zweiten verriegelten Position gleitbar angeordnet ist, die in die zweite Stufe (211') und die dritte Oberfläche eingreift,
optional wobei der Freigabe-SMA-Draht (228b) angeordnet ist, um das Verriegelungsteil (220) unter der Vorspannung des Vorspannelements (223) von entweder der ersten oder der zweiten Verriegelungsposition in die entriegelte Position zu bewegen.

14. Haptischer Handschuh (1) nach Anspruch 13, wobei der Freigabe-SMA-Draht (223) angeordnet ist, um beim anfänglichen Zusammenziehen das Verriegelungsteil (220) aus der zweiten verriegelten Position über die zweiten Stufe (211') in die erste verriegelte Position unter der Vorspannung des Vorspannelements (223) zu bewegen, und bei weiterem Zusammenziehen das verriegelnde Teil (220) von der ersten verriegelten Position über die erste Stufe (211) in die entriegelte Position unter Vorspannung des Vorspannelementes (223) zu bewegen.

## Revendications

1. Gant haptique (1) permettant de fournir un retour haptique à la main d'un utilisateur, le gant haptique (1) comprenant :
une portion de base (10) et une ou plusieurs portions de doigt (20) s'étendant à partir de la portion de base (10), chaque portion de doigt (20) étant mobile par pivotement par rapport à la portion de base (10), et
un ou plusieurs câbles (30), comprenant chacun une extrémité distale raccordée à une portion de doigt (20) respective et une extrémité proximale s'étendant vers la portion de base (10) ; et
un ou plusieurs ensembles de commande de câble (100), au moins un ensemble de commande de câble (100) comprenant :
un mécanisme de limitation (120) conçu, lorsqu'il est enclenché, pour limiter le mouvement de l'extrémité proximale d'un câble respectif par rapport à la portion de base (10), limitant ainsi le mouvement d'une portion de doigt (20) respective par rapport à la portion de base (10) ; et
**caractérisé en ce que**
l'au moins un ensemble de commande de câble (100) comprend en outre :
un fil AMF (128) agencé, lors d'une contraction, pour enclencher ou désenclencher le mécanisme de limitation (120).

2. Gant haptique (1) selon la revendication 1, dans lequel l'au moins un ensemble de commande de câble (100) comprend le mécanisme de limitation (120) sous la forme i) d'un mécanisme de verrouillage (120a) conçu, lorsqu'il est enclenché, pour empêcher le déplacement de l'extrémité proximale du câble (30) respectif par rapport à la portion de base (10), et/ou ii) d'un mécanisme de freinage (120b) conçu, lorsqu'il est enclenché, pour appliquer une force de frottement à l'extrémité proximale du câble (30) respectif.

3. Gant haptique (10) selon l'une quelconque des revendications précédentes, dans lequel l'au moins un ensemble de commande de câble (100) comprend le mécanisme de limitation (120) sous la forme d'un mécanisme à ressort (120c) conçu, lorsqu'il est enclenché, pour appliquer une force de sollicitation le long du câble (30) respectif.

4. Gant haptique (1) selon la revendication 3 en combinaison avec la revendication 2, dans lequel le mécanisme de limitation (120) comprend en outre des mécanismes de limitation (120) sous la forme i) du mécanisme à ressort (120c), et ii) d'au moins un mécanisme parmi le mécanisme de verrouillage et le mécanisme de freinage (120a, 120b),
l'au moins un ensemble de commande de câble (100) comprenant éventuellement soit
a) au moins deux fils AMF (128), l'un de ces fils AMF (128a, 128b) étant agencé sélectivement pour enclencher ou désenclencher le mécanisme de verrouillage ou de freinage (120a, 120b) et un autre fil AMF (128c) est agencé sélectivement pour enclencher ou désenclencher le mécanisme à ressort (120c), soit
b) un fil AMF (128) agencé, lors d'une contraction initiale, pour i) enclencher le mécanisme à ressort (120c), ou ii) désenclencher le mécanisme de verrouillage ou de freinage (120a, 120b) et, lors d'une nouvelle contraction, pour respectivement i) enclencher le mécanisme de verrouillage ou de freinage (120a, 120b) ou ii) désenclencher le mécanisme à ressort (120c).

5. Gant haptique (1) selon l'une quelconque des revendications précédentes, dans lequel l'au moins un ensemble de commande de câble (100) comprend un mécanisme de rétraction (110) conçu pour appliquer en permanence une force de sollicitation de rétraction le long du câble (30).

6. Gant haptique (1) selon l'une quelconque des revendications précédentes, dans lequel l'au moins un ensemble de commande de câble (100) comprend une partie mobile (102) qui est couplée à la partie proximale du câble (30),
dans lequel la partie mobile (102) comprend éventuellement une bobine (175) et le câble (30) est enroulé sur la bobine (175),
dans lequel, en outre, la bobine (175) est éventuellement une bobine à multiples diamètres comprenant des portions de diamètres différents, et différents câbles (30) sont enroulés sur les portions de la bobine de diamètres différents et/ou éventuellement chaque portion de doigt (20) comprend une pluralité de segments de doigt (22), et différents câbles (30) sont raccordés par leur extrémité distale à différents segments de doigt (22) d'une portion de doigt (20) respective, lesdits différents câbles (30) étant enroulés sur des parties de la bobine (175) présentant des diamètres différents.

7. Gant haptique (1) selon l'une quelconque des revendications précédentes, dans lequel l'au moins un ensemble de commande de câble (100) comprend une partie intermédiaire (124), et dans lequel le fil AMF (128) est agencé pour déplacer la partie intermédiaire (124) afin d'enclencher ou de désenclencher le mécanisme de limitation (120), ladite partie intermédiaire (124) étant éventuellement agencée pour pivoter afin d'enclencher ou de désenclencher le mécanisme de limitation (120) et/ou ledit fil AMF (128) étant couplé à la partie intermédiaire (124) par l'intermédiaire d'un élément élastique (221).

8. Gant haptique (1) selon l'une quelconque des revendications précédentes en combinaison avec les revendications 5 et 7, dans lequel le fil AMF (128) est agencé pour enclencher ou désenclencher la partie intermédiaire (124) vis-à-vis de la partie mobile (102) de manière à enclencher ou désenclencher le mécanisme de limitation (120),
la partie intermédiaire (124) et la partie mobile (102) comprenant éventuellement des surfaces d'enclenchement leur permettant de s'enclencher l'une dans l'autre, lesdites surfaces d'enclenchement étant conçues, lors d'un enclenchement, pour limiter le coulissement entre la partie intermédiaire (124) et la partie mobile (102), chaque surface d'enclenchement comprenant éventuellement en outre une pluralité de dents complémentaires.

9. Gant haptique (1) selon l'une quelconque des revendications précédentes, dans lequel l'ensemble de commande de câble (100) comprend un verrou (200), le verrou (200) comprenant une partie de verrouillage (220) mobile entre une position verrouillée et une position non verrouillée, et dans lequel le fil AMF (228a) est agencé, lors d'une contraction, pour faire passer la partie de verrouillage (220) en position verrouillée, enclenchant ou désenclenchant ainsi le mécanisme de limitation (120),
un fil AMF de libération (228b) étant éventuellement agencé, lors d'une contraction, pour faire passer la partie de verrouillage (220) en position non verrouillée, entraînant ainsi un désenclenchement ou enclenchement respectif du mécanisme de limitation (120).

10. Gant haptique (1) selon la revendication 9, dans lequel le verrou (200) est conçu pour rester en position verrouillée ou déverrouillée lorsque le fil AMF (228a, 228b) cesse d'être sous tension.

11. Gant haptique (1) selon l'une quelconque des revendications 9 et 10, dans lequel le verrou (200) comprend :
une structure de support (210) comprenant une première et une deuxième surface séparées par un gradin (211),
une partie de verrouillage (220) pouvant coulisser le long de la première et/ou de la deuxième surface entre la position déverrouillée dans laquelle elle est en contact avec la première surface et la position verrouillée dans laquelle elle est en contact avec le gradin (211) et la deuxième surface, et
un élément de sollicitation (223) agencé pour solliciter la partie de verrouillage (220) contre le gradin (211) et la première et/ou la deuxième surface ;
étant entendu que le fil AMF (228a) est agencé, lors d'une contraction, pour déplacer la partie de verrouillage (220) le long de la première surface pour lui faire prendre la position verrouillée sous l'effet de l'élément de sollicitation (223) de manière à enclencher ou désenclencher le mécanisme de limitation (120), un fil AMF de libération (228b) étant éventuellement agencé, lors d'une contraction, pour faire passer la partie de verrouillage (220) en position non verrouillée en la faisant passer sur le gradin (211) sous l'effet de l'élément de sollicitation (223).

12. Gant haptique (1) selon la revendication 11,
dans lequel la structure de support (210) comprend un deuxième ensemble de première et deuxième surfaces séparées par un deuxième gradin (211b),
dans lequel le verrou (200) comprend en outre :
une deuxième partie de verrouillage (220') disposée de manière coulissante le long du deuxième ensemble de première et/ou deuxième surfaces entre une position déverrouillée dans laquelle elle est en contact avec la première surface respective et une position verrouillée dans laquelle elle est en contact avec le gradin (211b) respectif et la deuxième surface respective, et
un deuxième fil AMF (228a') agencé, lors d'une contraction, pour déplacer la deuxième partie de verrouillage (220') le long de la première surface respective pour lui faire prendre la position verrouillée sous l'effet d'un deuxième élément de sollicitation (223') ;
dans lequel la partie de verrouillage (220), en position verrouillée, est agencée pour enclencher ou désenclencher un premier mécanisme de limitation (120), et la deuxième partie de verrouillage (220'), en position verrouillée, est agencée pour enclencher ou désenclencher un deuxième mécanisme de limitation (120), et
dans lequel le fil AMF de libération (228b) est agencé, lors d'une contraction, pour faire passer à la fois la partie de verrouillage (220) et la deuxième partie de verrouillage (220') en position non verrouillée en les faisant passer sur le gradin (211a, 211b) respectif sous l'effet de l'élément de sollicitation (223, 223') respectif.

13. Gant haptique (1) selon l'une quelconque des revendications 11 et 12, dans lequel la structure de support (210) comprend une troisième surface séparée de la deuxième surface par un deuxième gradin (211'),
dans lequel la partie de verrouillage (220) est agencée de manière coulissante le long des première, deuxième et/ou troisième surfaces entre la position non verrouillée dans laquelle elle est en contact avec la première surface, une première position verrouillée dans laquelle elle est en contact avec le gradin (211) et la deuxième surface, et une deuxième position verrouillée dans laquelle elle est en contact avec le deuxième gradin (211') et la troisième surface,
le fil AMF de libération (228b) étant éventuellement agencé pour faire passer la partie de verrouillage (220) de la première ou de la deuxième position verrouillée à la position non verrouillée sous l'effet de l'élément de sollicitation (223).

14. Gant haptique (1) selon la revendication 13, dans lequel le fil AMF de libération (223) est agencé, lors d'une contraction initiale, pour faire passer la partie de verrouillage (220), de la deuxième position verrouillée à la première position verrouillée, en la faisant passer sur le deuxième gradin (211') sous l'effet de l'élément de sollicitation (223), et, lors d'une contraction ultérieure, pour faire passer la partie de verrouillage (220) de la première position verrouillée à la position non verrouillée en la faisant passer sur le premier gradin (211) sous l'effet de l'élément de sollicitation (223).
